# EUROPÄISCHE PATENTANMELDUNG

(11) **EP 3 076 145 A1**
(43) Veröffentlichungstag der Anmeldung: **05.10.2016**
(21) Anmeldenummer: 16162917.5
(22) Anmeldetag: 30.03.2016
(51) Int. Cl.: G01L 1/14

(54) **TEXTILMATERIAL MIT EINGEARBEITETEN ELASTOMERSENSOREN**

(30) Priorität: 31.03.2015 DE 102015105004
(71) Anmelder: Fraunhofer-Gesellschaft zur Förderung der angewandten Forschung e.V., 80686 München (DE)
(72) Erfinder: BRUNNER, Bernhard, 97250 Erlabrunn (DE); ZIEGLER, Johannes, 97082 Würzburg (DE); HAGENGUTH, Viola, 36043 Fulda (DE)
(74) Vertreter: Strehl Schübel-Hopf & Partner

(57) **Zusammenfassung**

Die vorliegende Erfindung betrifft ein Textilmaterial zum Messen von vertikalen Drücken und von Dehnungen, umfassend ein flächig ausgebildetes textiles Substrat sowie mindestens einen darauf angeordneten Drucksensor, wobei der mindestens eine Drucksensor einen Dielektrischen Elastomersensor (DES) aufweist, umfassend einen flächigen Schichtverbund mit mindestens einer dielektrischen Elastomerschicht sowie mindestens zwei jeweils durch eine dielektrische Schicht voneinander isolierten Elektrodenschichten, die eine Elektrode und eine Gegenelektrode bilden, wobei mindestens eine der genannten Schichten eine profilierte Oberfläche besitzt, deren Erhebungen auf der Oberfläche einer anderen Schicht des DES aufliegen, wobei die äußersten Elektrodenschichten des DES häufig mit einem Isoliermaterial abgedeckt sind. Zwei elektrisch leitende Bahnen sind zum Führen von elektrischem Strom von/zu den Elektroden zu einer Ausleseanordnung vorgesehen, die über Verbindungselemente an der Elektrode und der Gegenelektrode befestigt sind.

Das Textilmaterial kann weitere Schichten oder aktive Komponenten aufweisen wie ein Abstandshaltertextil, ein zweites, flächiges Textilsubstrat, das den mindestens einen Drucksensor auf seiner vom Textilsubstrat abgewandten Seite abdeckt, und/oder zusätzliche, außenliegende Abschirmungen. Es kann in vielfältigen Formen zur Verfügung gestellt werden, beispielsweise als Strumpf oder als Matte, und dient der Druck- und/oder Dehnungsmessung an Objekten sowie an Lebewesen, unter anderem allem für orthopädische Zwecke, als (Körper-)Waage oder für sportliche Zwecke.

## Beschreibung

Die vorliegende Erfindung betrifft ein Textilmaterial mit eingearbeiteten Elastomersensoren, das in flächiger, gegebenenfalls dreidimensional verarbeiteter Form vorliegt und sich für die Herstellung von Matten oder Bekleidungsstücken eignet. Das Textilmaterial enthält einen oder mehrere Elastomersensoren, der/die über leitfähige Verbindungen ausgelesen werden kann/können, und kann vor allem für orthopädische Zwecke, als (Körper-)Waage oder für sportliche Zwecke verwendet werden.

Druckmessungen sind in vielen Bereichen nötig oder wünschenswert, insbesondere für orthopädische oder medizinische Zwecke. Hierzu zählen Druckmessungen in Schuhsohlen, zusammenrollbare Waagen oder Messungen, die Informationen über sportliche Aktivitäten geben. Insbesondere Druckmessungen am Fuß sind von besonderer Bedeutung, beispielsweise im Rahmen der Behandlung des sogenannten diabetischen Fußes.

Bisherige Hersteller von Drucksensoren, die Druckbelastungen am menschlichen Fuß messen, beschränken sich meist auf die plantare Fußdruckmessung, also die Messung der Druckbelastung an der Fußunterseite. Diese wird häufig durch eine fest montierte Messplatte realisiert, über die der Patient entweder laufen muss oder sich auf diese stellt, wie z.B. in DE 200 05 942 U1 gezeigt. Nachteilig an derartigen Messplatten ist, dass es sich dabei um fest installierte, nicht mobile Messsysteme handelt. Bekannte Systeme messen dabei die Druckverteilung über mehrere hundert starr in die Platte eingebaute Druckmesschips. Da solche Messmatten nur bei Orthopäden, Physiotherapeuten und in Kliniken vorhanden sind, ist auch keine dauerhafte Messung der Druckverteilung über viele Schritte oder gar Tage hinweg messbar.

Alternativ wird das Einlegen einer Sensorsohle vorgeschlagen. Einlegesohlen können in den Schuh des Patienten eingelegt werden und zum Beispiel auch über mehrere Tage hinweg die Druckverteilung an der Fußunterseite erfassen. Solche Sensorsohlen werden z.B. in EP 0 415 036 A2, DE 20 2012 100 974 U1, DE 11 2012 000 006 T5, DE 10 2011 012 458 A1 und DE 10 2012 004 117 A1 beschrieben. Allerdings handelt es sich bei den bekannten Einlegesohlen in der Regel ebenfalls um recht starre und harte Produkte, die Druckmesschips enthalten. In manchen Fällen beinhalten sie einen Kabelstrang, welcher die Messsignale aus der Sohle in ein Zusatzgerät sendet. Ein derartiges Zusatzgerät, welches die Größe von ca. 2 Zigarettenschachteln haben kann, wird am Gürtel des Patienten befestigt. In einer anderen kommerziellen Variante sind die nötige Stromversorgung und ein Sendemodul in die Sohle integriert. Auch diese Einlegesohle basiert auf dem Messprinzip der starren Druckmesschips. Mit beiden Methoden wird durch eine Vielzahl an Sensoren, die auf die jeweilige Messfläche verteilt sind, ausschließlich die Verteilung der Druckbelastung auf der flächigen Fußunterseite gemessen.

Ein auf irregulär geformte Oberflächen einwirkender Druck kann beispielsweise gemäß US 2005/0145045 A1 mit Hilfe eines Sensors mit einzelnen Sensorelementen gemessen werden, wobei die die Sensorelemente tragende Substratschicht so ausgebildet ist, dass die einzelnen Sensorelemente relativ zueinander beweglich sind. Fußdruckmessung mit einem flexiblen Sensorgebilde offenbart auch US 5,033,291. Ein Sensor mit zwei dielektrischen Schichten, die einander zugewandte, alternierende Erhöhungen aufweisen, und einem dazwischen liegenden leitfähigen Element ist in US 2011/0203390 A1 offenbart. Senkrecht zur Fläche des Sensors ausgeübter Druck führt zu einer strukturellen Deformation des leitfähigen Elementes, wodurch sich dessen Widerstand ändert. Ein Paar leitfähiger Fäden dient zum Abgreifen der Veränderung. Der Sensor kann für die Messung des Plantardrucks verwendet werden. Ein textiler kapazitiver Drucksensor für die Bekleidung von Dekubitus-Patienten wird in WO 2005/121729 A1 vorgeschlagen. Eine der Flächenelektroden dieses Sensors ist aus einem leitfähigen Textil gebildet, während die andere ein nicht leitendes Textil ist, in das Elektroden aus leitfähigem Garn eingestickt oder auf andere, textile Art eingebracht werden können. Eine Vorrichtung zur Messung der flächigen Verteilung von Druckkräften, die eine verformbare Messfläche mit darin enthaltenen Kraftsensoren aufweist, ist in WO 2006/103048 offenbart.

In WO 2007/143966 A2 wird vorgeschlagen, Sensoren zwischen zwei Textilschichten anzuordnen, wobei eine textile Flächenverkleidungsstruktur entsteht, die direkt auf einem Untergrund montiert oder mit einem handelsüblichen Bodenbelag abgedeckt werden kann. Dabei können in die Textilschicht-Anordnung integrierte Elektronikmodule bzw. elektronische Bauelemente mittels Klebens mit nichtleitfähigem oder anisotrop leitendem Kleber kontaktiert werden. US 2010/0162832 A1 offenbart den Einsatz von dielektrischen Elastomersensoren für Druckmessungen neben Sensoren für die Messung von Scherkräften in Bekleidungsstücken. Als Elektroden dienen textile Elektroden. Gemäß WO 2013/120624 werden für ähnliche Sensoren gestrickte Elektroden verwendet. Auch WO 2007/059971 A1 nutzt Textilfäden für die Herstellung von Elektroden, die in Socken eingearbeitet werden sollen.

Nach WO 2009/023937 A1 sollen Sensoren aus einem druckempfindlichen Material eingesetzt werden, beispielweise aus Schaum oder Fasern, das mit elektrisch leitendem Material wie Polypyrrol oder PEDOT beschichtet ist. Die Elektroden können stattdessen aus leitenden Fasern bestehen. Die Sensoren können in Ausnehmungen eines Substrats und u.a. für Socken verwendet werden. Auch in WO 2013/116242 A2 wird eine Socke mit Drucksensoren beschrieben.

Im Artikel "Textile Pressure Sensors for Sports Applications" von Thomas Holleczek, Alex Rüegg, Holger Harms, Gerhard Tröster; Wearable Computing Lab.; ETH Zurich, Switzerland, veröffentlicht in Sensors, 2010 IEEE, 1-4 Nov. 2010, S. 732-737 (Print ISBN 978-1-4244-8170-5) wird die dreidimensionale Druckmesswerterfassung in einer "Messsocke" beschrieben. Es handelt sich dabei um die Integration von kapazitiven Messsensoren in eine Skisocke, die mit Hilfe eines Algorithmus erkennen, wann der Snowboarder sich in einer Kurve befindet. Die Sensoren registrieren Kapazitätsänderungen. Sie sind aus einem Schaum und zwei leitfähigen Geweben aufgebaut und weisen eine Höhe von 5 mm auf (Sandwichbauweise). Diese sind auf die Socke in Taschen aufgenäht und mit Hilfe von handelsüblichen Drähten mit der Messelektronik verbunden. Obwohl die Integration der Sensoren in die Socke ganz allgemein beschrieben ist, wird lediglich der Druck an der Fußunterseite erfasst.

Werden Fäden oder Fasern z.B. eines Gestricks für die Ausbildung von Elektroden verwendet, besteht die Gefahr, dass Feuchtigkeit, z.B. Schweiß, an die dem Körper des Trägers zugewandte Seite des Sensors gelangt. Dadurch besteht die Gefahr von Kurzschlüssen und dem Verfälschen des Signals. Im Stand der Technik wird dieser Problematik jedoch selten Rechnung getragen, genauso wenig wie dem Erreichen eines ausreichenden Tragekomforts.

Die Erfinder haben es sich zur Aufgabe gemacht, dreidimensionale Druckmessungen am menschlichen Fuß möglich zu machen, mit deren Hilfe Druckbelastungen nicht nur an der Unterseite des Fußes, sondern auch an der Zehenoberseite, am Spann und an den Knöcheln des Fußes gemessen werden können. Noch allgemeiner liegt der Erfindung die Aufgabe zugrunde, ein für dreidimensionale Druckmessungen geeignetes flexibles Textilmaterial aufzufinden, das sich sowohl für anliegende Bekleidungsstücke wie Socken oder Strümpfe als auch für flächige, flexible Matten eignet und eingearbeitete Drucksensoren aufweist, mit denen der Druck zwischen der Haut des Trägers und einem Gegenelement an beliebigen Stellen des Körpers gemessen werden kann, ohne dass der Tragekomfort beeinträchtigt ist und Feuchtigkeitsprobleme entstehen können.

Gelöst wird die Aufgabe durch die Bereitstellung eines Textilmaterials, umfassend ein flächig ausgebildetes textiles Substrat sowie mindestens einen darauf angeordneten Drucksensor, wobei mindestens einer, vorzugsweise jeder der Drucksensoren folgende Komponenten aufweist:
(a) einen Dielektrischen Elastomersensor (DES), umfassend einen flächigen Schichtverbund mit mindestens einer dielektrischen Elastomerschicht sowie mindestens zwei jeweils durch eine dielektrische Schicht voneinander isolierten Elektrodenschichten, die eine Elektrode und eine Gegenelektrode bilden, wobei mindestens eine der genannten Schichten eine profilierte Oberfläche besitzt, deren Erhebungen auf der Oberfläche einer anderen Schicht des DES aufliegen, und deren Vertiefungen ein ausgespartes Volumen zwischen den beiden genannten Schichten definieren,
(b) zwei elektrisch leitende Bahnen, die elektrischen Strom von der Elektrode und von der Gegenelektrode zu einer Ausleseanordnung leiten können, und
(c) zwei Verbindungelemente, die die elektrische Anbindung der zwei elektrisch leitenden Bahnen an die Elektrode und die Gegenelektrode sicherstellen.

Das flächig ausgebildete textile Substrat kann die Form einer Matte oder eines Kleidungsstückes besitzen, beispielsweise eines Strumpfs, einer Socke oder eines Handschuhs. Die Fäden und/oder Fasern dieses Substrats können auf beliebige Weise miteinander verbunden, beispielsweise (unter Herstellung eines Filzes) gelegt, gewebt, gewirkt, gestrickt oder gehäkelt sein.

Der Einsatz Dielektrischer Elastomersensoren (DES) wurde erfindungsgemäß gewählt, da sich solche Sensoren bestens durch ihre Flexibilität und Elastizität an die zu messende Geometrie anpassen und durch ihre Weichheit keine zusätzlichen Druckstellen hervorrufen.

Jeder der erfindungsgemäß eingesetzten Dielektrischen Elastomersensoren besteht grundlegend aus mindestens zwei elastischen und elektrisch leitfähigen Elektroden, die ein hoch isolierendes, ebenfalls elastisches Dielektrikum zwischen sich einschließen. Dadurch entsteht der prinzipielle Aufbau eines Plattenkondensators, und es kann eine elektrische Kapazität gemessen werden. Die Höhe der Kapazität hängt dabei mathematisch definierbar von der Elektrodenfläche und dem Abstand der Elektroden zueinander ab.

Wird der DES gedehnt, so vergrößert sich seine Fläche, und die Dicke (also der Abstand der Elektroden zueinander) verringert sich. Dies hat eine Kapazitätszunahme zur Folge, welche mit einem geeigneten Messsystem aufgezeichnet werden kann. Gleichzeitig ändert sich der Widerstand innerhalb der Elektroden, so dass sich auch eine Widerstandsmessung zur Erfassung der geometrischen Änderung eignet.

Es sollte klar sein, dass die als Bestandteil des DES vorgesehene mindestens eine dielektrische Elastomerschicht diejenige Schicht sein kann, die die (einzig vorhandenen zwei) Elektroden voneinander trennt oder eine Schicht sein kann, die zwei der (dann mehreren vorhandenen) Elektroden voneinander trennt. Stattdessen kann sie jedoch auch außerhalb der (äußersten) Elektrodenschichten des DES angeordnet sein. Auch in diesem Fall wird sie als Bestandteil des DES angesehen.

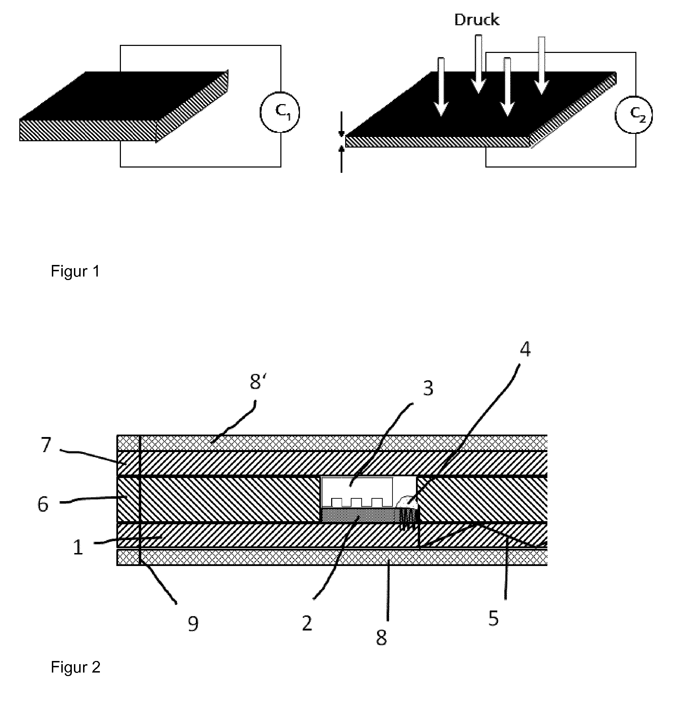

Die Funktionsweise eines solchen Dielektrischen Elastomersensors ist in Figur 1 schematisch dargestellt. Mit ihm lassen sich sowohl Längenänderungen als auch Druckbelastungen messen. In einem DES können beliebig viele leitfähige Elektroden und Dielektrika übereinander appliziert werden. Dadurch kann die Grundkapazität der zu messenden Kapazität erhöht werden.

Üblicherweise sind die beiden Elektroden bzw., im Falle einer höheren Anzahl von Elektroden im DES, die jeweils am weitesten außen liegenden Elektroden außenseitig mit einer isolierenden Schutzschicht versehen, wobei diese unter bestimmten Voraussetzungen jedoch auch (a) zumindest einseitig fehlen oder (b) nur Teilbereiche abdecken kann. (a) kommt in Frage, wenn der DES als solcher an isolierende Strukturen angrenzt, so dass eine eigenständige Isolierung der außenliegenden Elektroden nicht erforderlich ist. Dies kann auf einer oder auf beiden Seiten des DES prinzipiell der Fall sein. Auch kann die außenliegende Elektrode als Messelektrode für eine Druckmessung an einem Objekt verwendet werden, auf dem sie direkt aufliegen soll. Das ist beispielsweise für die Anwendung des erfindungsgemäßen Textilmaterials als Gerät zur Blutdruckmessung möglich. (b) kommt in Frage, wenn die Elektroden keine Kontaktfahnen aufweisen und der elektrische Abgriff über eine freiliegende Fläche der äußeren Elektrode erfolgen soll. Die isolierende Schutzschicht ist nicht notwendigerweise, aber vorzugsweise aus einem Elastomer gebildet, um die Bewegungen der Elektroden nicht zu behindern oder zu verfälschen. Hierfür können die gleichen Materialien verwendet werden wie weiter unten für die dielektrische dehnbare Elastomerschicht angegeben.

Zwar ist es möglich, relativ großflächige DES vorzusehen, die gegebenenfalls strukturierte Elektroden aufweisen derart, dass einzelne Punkte auf den DES-Flächen separat angesteuert und ausgelesen werden können. So kann beispielsweise die gesamte Sohle eines Strumpfs mit einem einzigen, die Sohlenfläche völlig oder großenteils bedeckenden DES ausgelegt werden, oder es kann sogar die ganze Fläche einer textilen Matte, die z.B. eine etwas größere Höhe und Breite als ein Mensch besitzt, oder ein Großteil dieser Fläche mit einer entsprechenden Sensormatte belegt sein. In der Regel ist es jedoch vorzuziehen, eine Mehrzahl von einzelnen DES-Sensoren mit kleineren Abmessungen vorzusehen. Deren Fläche wird anhand der gesuchten Information gewählt. So können für Strümpfe oder Socken beispielsweise DES mit Abmessungen von ca. 0,5 - 5,0 cm x 0,5 - 5,0 cm gewählt werden, für Handschuhe DES-Folien mit Abmessungen von ca. 0,2 - 2,0 x 0,2 - 2,0 cm. Für Strümpfe oder Socken können beispielsweise 2 bis 100, vorzugsweise 10 bis 50 einzelne Sensoren und damit Messpunkte vorgesehen sein.

Werden großflächige DES vorgesehen, ist es günstig, deren Elektrodenschichten zu strukturieren, derart, dass voneinander getrennte, elektrisch jeweils einzeln addressierbare Sensoren entstehen, die durch flächiges Material aus einem dielektrischen Elastomer, beispielsweise einer (oder einem Schichtverbund mehrerer) Siliconfolie(n) getrennt sind. Um in einer solchen Ausführungsform eine ausreichende und möglichst hohe Feuchtigkeitsdurchlässigkeit durch das Textilmaterial hindurch zu erzielen, wird diese Folie perforiert, und zwar vorzugsweise dort, wo sich keine elektrisch leitenden Komponenten befinden.

Wie erwähnt, weist jeder der erfindungsgemäß zu verwendenden DES mindestens zwei dünne, schichtförmige Elektroden, die durchgehend oder strukturiert sein können, sowie mindestens eine dielektrische, d.h. möglichst hoch isolierende, vorzugsweise stark dehnbare Elastomerschicht auf. Das gesamte dielektrische Material des Dielektrischen Elastomersensors kann beispielsweise aus Silicon, Acryl, Naturkautschuk und/oder Polyurethan bestehen oder eines oder mehrere dieser Materialien als Komponente enthalten; alternativ kann ein Teil, z. B. einzelne Komponenten, des Dielektrischen Elastomersensors aus einem oder einer Kombination der genannten Materialien gebildet sein. Das elastomere Material kann zur Verbesserung der gewünschten Eigenschaften gegebenenfalls mit Füllstoff befüllt sein, z.B. um die Isolationswirkung zu verbessern. Die schichtförmigen Elektroden werden vorzugsweise ebenfalls aus einem hochdehnbaren elastomeren Grundmaterial gebildet, wobei ein Teil, vorzugsweise alle elektrisch leitfähigen Komponenten aus Silicon, Acryl, Polyurethan oder Polyurethanschaum gebildet ist/sind, welcher/welche bis zur Perkolationsschwelle oder über diese hinaus mit leitfähigen Partikeln gefüllt ist, beispielsweise Partikeln aus Graphit, Graphen, Ruß, CNTs (Kohlenstoffröhren, "carbon nanotubes"), Metallpartikeln wie Silberpartikeln, Kupferpartikeln, Partikeln aus Aluminium oder einem Edelmetall oder Partikeln mit einem leitenden oder nichtleitenden Kern und einer elektrisch leitenden Beschichtung.

Die Elektroden können in einer Ausführungsform der Erfindung integral ausgebildete Kontaktierungsfahnen aufweisen, die sich über den Körper des DES hinaus erstrecken, ähnlich wie bei schichtförmigen Festkörper-Batterien oder -Akkumulatoren, um eine Ankontaktierung seitlich des eigentlichen Sensors zu ermöglichen.

Zwischen einer Elektrode und ihrer Gegenelektrode befindet sich immer mindestens eine isolierende Elastomerschicht. In einem einfachen Fall handelt es sich um eine Folie, deren Außenseiten schichtförmige Elektroden tragen. Auch können Folienverbünde eingesetzt werden, in denen sich mehrere Elastomerschichten und Elektrodenschichten abwechseln, derart, dass jeweils zwei Elektrodenschichten durch eine dielektrische Elastomerschicht voneinander getrennt sind. Bei einem Aufbau mit mehr als 2 Elektrodenschichten weisen die ungeraden Elektrodenebenen (Elektrode 1, 3, 5, ...) und alle geraden Elektrodenebenen (2, 4, ...) das jeweils gleiche elektrische Potential auf, was dadurch bewirkt wird, dass sie untereinander elektrisch verbunden sind.

Wenn es sich bei den Elektrodenschichten und den isolierenden Elastomerschichten jeweils um flächige, insbesondere auch innen unprofilierte Elemente handelt, ist weiterhin eine dilelektrische Elastomerschicht in Form eines flexiblen, flächigen Formkörpers aus einem isolierenden Material vorgesehen, der auf dem flächigen Schichtverbund aus dielektrischen Schichten und Elektrodenschichten, z.B. auf der oberen bzw. obersten, z.B. der dem zu vermessenden Körper zugewandten Elektrodenfläche, aufliegt und diese nach außen isoliert. Dieser Formkörper weist auf seiner von der Elektrodenfläche abgewandten und damit dem zu vermessenden Körper zugewandten Seite eine ebene Oberfläche auf, während die der Elektrodenfläche zugewandte Seite Erhebungen sowie Vertiefungen aufweist, die ein ausgespartes Volumen zwischen der Oberfläche des Elastomersensors und der Oberfläche des Formkörpers definieren. In dieser Ausführungsform haben die Elektroden in der Regel eine Dicke im Bereich von üblicherweise 2 bis 20, vorzugsweise 5 bis 15 und stärker bevorzugt etwa 10 µm.

In alternativen Ausführungsformen der erfindungsgemäß zu verwendenden DES ist eine Schicht mit profilierter Oberfläche bereits in die Sensorkonstruktion integriert. Solche Ausführungsformen sind bekannt und z.B. in DE 10 2012 107 581 A1 und EP 2 698 616 A2 offenbart. So ist es gemäß DE 10 2012 107 581 A1 beispielsweise möglich, zwei isolierende, profilierte, elastomere Schichten einander gegenüber derart anzuordnen, dass Erhebungen der einen Schicht in Ausnehmungen der anderen Schicht eingreifen können und umgekehrt. Vertikaler Druck auf das Schichtsystem bewirkt, dass das Elastomermaterial der Erhebungen gegen die jeweils andere Schicht gedrückt wird, wobei sich die Erhebungen verbreitern und dabei verkürzen. Dadurch verringert sich der Abstand von jeweils auf den Außenseiten der beiden Schichten vorhandenen Elektroden, was kapazitativ oder resistiv gemessen werden kann. Alternativ kann eine elektrisch leitenden Schicht zwischen den beiden isolierenden, elastomeren Schichten angeordnet sein, die bei fehlender Kraft auf das System in einer Ebene zwischen den beiden isolierenden Schichten liegt und bei zunehmendem Eingriff der Erhebungen der isolierenden Schichten in die Vertiefungen der jeweiligen Gegenschicht ausweichen muss und sich dabei wellt. In dieser Ausgestaltung kann die Längenänderung der elektrischen leitenden Schicht gemessen werden. EP 2 698 616 A2 offenbart Ausführungsformen, in denen sich die Elektrodenschichten auf der Innenseite von profilierten, dielektrischen, elastomeren Schichten befinden oder in denen die Schichten mit profilierten Oberflächen elektrisch leitfähig sind und durch dielektrische Schichten oder Folien voneinander getrennt sind.

Die Erhebungen der Schicht mit profilierter Oberfläche können als Noppen, Wellen oder Stege oder in beliebiger anderer Form ausgebildet sein.

Durch das Vorhandensein der Schicht mit profilierter Oberfläche wird in allen Ausgestaltungen der Erfindung die Druckempfindlichkeit des Sensors erhöht.

Die Elektrodendicke liegt in solchen der oben genannten Ausführungsformen, in denen die Elektroden unprofiliert sind und Schichtform besitzen, vorzugsweise bei etwa 10 - 100 µm, während die Dielektrikumsdicke in Ausführungsformen, in denen das Dielektrikum als plane bzw. unprofilierte Schicht vorgesehen ist, bevorzugt bei etwa 50 - 300 µm liegt.

Infolge des grundlegenden Schichtaufbaus mit abwechselnden Lagen/Schichten/Folien von Dielektrikum und Elektrode können beliebig hohe Kapazitäten in der Elastomerfolie aufgebaut werden.

Es ist bevorzugt, dass die einzelnen Schichten des Sensors fest miteinander verbunden sind und sich nicht zerstörungsfrei voneinander lösen lassen. Dies gelingt beispielsweise, indem das Material des Dielektrikums mit dem Grundmaterial der Elektroden identisch ist und/oder indem die Herstellung des Sensors erfolgt, indem die einzelnen Schichten in Form von Prepolymeren ausgebildet werden, die sodann nacheinander oder gemeinsam ausgehärtet werden. Alternativ können die einzelnen Schichten miteinander verklebt werden.

Die Dehnbarkeit der Schichten aus Dielektrikum und aus Elektrodenmaterial beträgt vorzugsweise mindestens 1%, stärker bevorzugt mindestens 5% und besonders bevorzugt mindestens 10%. In günstigen Ausführungsformen lässt sich der Folienverbund des DES auf mindestens bis zu 100% seiner Länge in x- und in y-Richtung dehnen, und zwar auch in einer wechselnden Dauerbelastung. Eine starke Dehnbarkeit ist vor allem bei Einsatz des oben beschriebenen, außerhalb des DES angeordneten flexiblen flächigen Körpers, der auf seiner der Elektrodenfläche zugewandten Seite Erhebungen sowie Vertiefungen aufweist, günstig, weil die Druckbelastung auf diesen Körper dazu führt, dass sich dessen Profilierungen in die Schichten des DES eindrücken, wobei die Schichten des DES in die Hohlräume des Profils gedrückt werden, wobei rechnerisch bis zu ca. 80 - 100% Dehnung auftritt.

Unabhängig von der gewählten Struktur des Sensors ist es erfindungsgemäß bevorzugt, dass auf dessen dem flächigen Textilmaterial abgewandter Oberseite der bereits erwähnte flexible, flächige Formkörper aufgebracht ist, welcher auf der den sonstigen Bestandteilen des DES-Sensors abgewandten Seite eine ebene Oberfläche aufweist, während die dem restlichen DES-Sensor zugewandte Seite eine profilierte Oberfläche mit Erhebungen, die auf der Oberfläche des Elastomersensors aufliegen und gegebenenfalls mit diesem fest verbunden, beispielsweise verklebt sind, sowie Vertiefungen besitzt, die ein ausgespartes Volumen zwischen der Oberfläche des Elastomersensors und der Oberfläche des Formkörpers definieren. Dieser Formkörper kann beispielsweise die Form einer zylindrischen oder konischen Noppenstruktur aufweisen. Vorzugsweise befindet er sich auf dem gesamten oder dem größten Teil (z.B. auf mindestens 70%, vorzugsweise auf mindestens 80% und besonders bevorzugt auf mindestens 90%) der Oberfläche des DES-Sensors und fehlt z.B. ggf. nur dort, wo und wenn diese Oberfläche für die Ankontaktierung benötigt wird. Er kann aus demselben Material wie die dielektrische Schicht des Elastomersensors bestehen oder aus einem anderen Material, das flexibel und vorzugsweise dehnbar ist, beispielsweise aus Silicon, Acryl oder Polyurethan/Polyurethanschaum.

Die erfindungsgemäß einsetzbaren Sensoren werden auf beliebige Weise am textilen Substrat befestigt, derart, dass sie nicht verrutschen können. Möglich sind Befestigungen beispielsweise durch Verkleben, Vernähen oder Verstricken. Letzteres ist möglich, wenn der Sensor bereits während der Herstellung der Strickware in das Textil eingestrickt wird.

Die beiden Verbindungselemente, die die elektrische Anbindung der zwei elektrisch leitenden Bahnen an die Elektrode und die Gegenelektrode des DES oder deren Kontaktierungsfahnen sicherstellen, können für eine rein mechanische Sicherung der Kontakte gegen Verrutschen oder dergleichen vorgesehen sein. Sie können z. B. als mechanische Klemmen ausgestaltet sein; vorzugsweise handelt es sich dabei jedoch um ein elastomeres, optional auch klebendes Material, das die Kontakte umgibt. Mit einem derartigen Material lässt sich eine gute Haftung zwischen den Verbindungselementen einerseits und den zwei elektrisch leitenden Bahnen sowie der Elektrode und der Gegenelektrode des DES andererseits erreichen. Eine gute Haftung und ein elastisches Verhalten ist hilfreich, da die entsprechenden Elemente an dieser Stelle häufig unter Zugbelastung stehen und/oder durch Bewegungen der Elemente gegeneinander mechanisch beansprucht werden. Vorzugsweise sind die Verbindungselemente aus elektrisch leitfähigem Material ausgebildet, um auch eine gute elektrische Verbindung zwischen den Verbindungselementen einerseits und den zwei elektrisch leitenden Bahnen sowie der Elektrode und der Gegenelektrode des DES andererseits erreichen. So können die Verbindungselemente, wenn sie als Klemmen ausgebildet sind, aus elektrisch leitendem Material, beispielsweise einem leitenden Metall, gebildet sein. In bevorzugten Ausführungsformen wird hierfür jedoch eine leitfähige, elastomere Masse eingesetzt, nachstehend als elektrisch leitfähiges Elastomerkomposit bezeichnet, die bzw. das um die Kontakte herum angeordnet wird. Die elektrische Leitfähigkeit wird dabei durch elektrisch leitfähige Partikel erzeugt (Graphit, Graphen, Ruß, CNT, Silberpartikel, Kupferpartikel, leitfähig beschichtete Partikel), die im Elastomer ein elektrisch leitfähiges Perkolationsnetzwerk ausbilden. Dieses Elastomerkomposit kann in flüssiger oder pastöser Vorstufe aufgebracht und sodann abschließend vernetzt werden und verstärkt sowohl die mechanische als auch elektrische Verbindung zwischen den leitfähigen Verbindungselementen und der elektrischen Kontaktstelle des DES, z.B. auf einem frei von der Schutzschicht gelassenen Bereich der Elektroden oder auf einer Kontaktierungsfahne.

Um bei Bewegungen des Trägers (des Messsubjekts) Kurzschlüsse zwischen den beiden Anschlüssen einer einzelnen DES-Folie zu vermeiden, sind die Verbindungselemente, soweit sie elektrisch leitend sind, zumindest im Bereich der Anschlussstellen, vorzugsweise jedoch vollständig mit einem isolierenden Material abgedeckt, beispielsweise mittels eines hoch isolierenden, transparenten Silicon-Materials, das flüssig oder pastös aufgebracht und anschließend ausgehärtet werden kann.

Bei den elektrisch leitenden Bahnen, die elektrischen Strom von den beiden elektrisch leitfähigen Verbindungselementen eines jeden Sensors zu einer Ausleseanordnung leiten können, handelt es sich um beliebige dünne Strukturen wie Drähte, Fasern oder Fäden aus einem leitfähigen Material, deren Außenoberfläche gegebenenfalls isoliert sein kann. Konkrete Beispiele sind eingenähte Metalldrähte, gedruckte Leiterbahnen/Flächen, leitfähige Textilfäden, Textilfäden aus Polymermaterial oder Keramik, die leitfähig beschichtet sind. In einer spezifischen Ausführungsform der Erfindung, die mit allen offenbarten Ausgestaltungen kombinierbar ist, wird ein kommerziell erhältliches, elektrisch leitendes, außenseitig isoliertes PU-Garn (Polyurethangarn) verwendet. Diese dünnen Strukturen können in das Substrat eingenäht, eingestrickt, eingewebt oder auf das Substrat aufgeklebt, gegebenenfalls auch aufgedruckt sein. Alternativ können sie in einer anderen der textilen Strukturen geführt werden, die unten näher erläutert werden.

In einer ersten Ausgestaltung der Erfindung besteht das erfindungsgemäße Textilmaterial im Wesentlichen oder vollständig aus den voranstehend erläuterten Komponenten. In diesen Fällen werden die elektrisch leitenden Bahnen, die elektrischen Strom zu einer Ausleseanordnung leiten können, vorzugsweise durch das flächig ausgebildete textile Substrat bis zu dem Ort geführt, an dem der Übergang der durch die Sensoren gewonnenen Informationen an ein externes Gerät erfolgt. Diese Ausgestaltung kann beispielsweise dann gewählt werden, wenn das flächig ausgebildete textile Substrat relativ dick und kompressibel oder zumindest flauschig ist, so dass sich die Sensoren beim Tragen oder Aufliegen weitgehend dorthinein eindrücken lassen, so dass der Tragekomfort nicht oder kaum beeinträchtigt wird. Sie kann auch dann gewählt werden, wenn besonders dünne DES-Sensoren eingesetzt werden, oder wenn die Sensoren bei wenig empfindlichen Trägern genutzt werden sollen, was z.B. unter Umständen bei Messungen an Tieren der Fall sein kann.

In weiteren Ausgestaltungen der Erfindung enthält das erfindungsgemäße Textilmaterial zusätzliche Komponenten. Eine Reihe solcher Komponenten sind zusammen mit den wesentlichen Komponenten in Figur 2, einer Schnittansicht, gezeigt. In dieser Figur erkennt man eine untere Textilschicht 1, bei der es sich um das erfindungsgemäße, flächig ausgebildete textile Substrat handelt. Auf dessen Fläche ist ein dielektrischer Elastomersensor (DES) 2 angeordnet, bei dessen Darstellung auf Einzelheiten verzichtet wurde. Dessen Unter- und Oberseite besteht jeweils aus einem elektrisch leitenden, strukturierten oder nicht strukturierten, flexiblen Material, das als Elektrode fungiert, wobei die Elektroden durch mindestens eine dielektrische Schicht elektrisch voneinander isoliert und nach außen hin durch eine zusätzliche Schutzschicht elektrisch isoliert sind. Auf der Oberseite des Sensors befindet sich der oben beschriebene, flexible, flächige Formkörper 3, der auf der dem restlichen Elastomersensor abgewandten Seite, also in der gezeigten Figur auf seiner (dem Träger zugewandten) Oberseite, eine ebene Oberfläche aufweist, während die dem restlichen Elastomersensor zugewandte Seite eine profilierte Oberfläche mit Erhebungen, die auf der Oberfläche des Elastomersensors aufliegen oder mit dieser verklebt sind, sowie Vertiefungen besitzt. Er nimmt nicht die gesamte Oberfläche des Sensors ein, sondern besitzt eine Aussparung, in der sich die elektrisch leitfähigen Verbindungselemente 4 zu den Elektroden des Sensors befinden, von denen jedoch nur eine dargestellt ist. Von diesen ausgehend sind leitfähige Fäden 5 durch das Textilmaterial geführt, beispielsweise durch Einsticken oder sonstiges Einarbeiten in die Struktur des Textilmaterials, oder indem geeignete Fäden des Strukturmaterials von vorneherein leitfähig ausgebildet werden.

Neben diesen wesentlichen Bestandteilen der Erfindung ist in Fig. 2 ein Abstandshalter-Textil 6 gezeigt, das eine Kaschierung der Sensoren bewirken soll, so dass das erfindungsgemäße Textilmaterial auch bei dickeren Sensoren oder bei geringerer Zusammendrückbarkeit der unteren Textilschicht als bequem zu tragen empfunden wird, weil die zusätzliche Dicke des Textilmaterials in den Bereichen, in denen sich die Sensoren befinden, dadurch ausgeglichen wird. Dieses besitzt in der Regel eine ähnliche Dicke wie die Sensoren zusammen mit den darauf befindlichen flexiblen, flächigen Formkörpern und erstreckt sich um diese herum vorzugsweise überall dort auf der Fläche des textilen Substrats, wo sich keine Sensoren befinden. Dies muss aber nicht der Fall sein, denn in manchen Fällen ist es auch gewollt, dass das erfindungsgemäße Textilmaterial nicht überall die gleiche Dicke aufweist oder als gleichmäßig bzw. gleichmäßig dick empfunden wird. Die Fasern/Fäden des Abstandshalter-Textils können auf beliebige Weisen untereinander verbunden sein, z.B. in Form eines Gewirks. Alternativ kann es sich dabei um ein Gestrick, ein Gewebe, ein Gelege oder dergleichen handeln. Für das Textil können Polymerfasern oder Naturfasern, insbesondere in Form von Vliesen, Polymerschäumen, oder Abstandsgewirken, eingesetzt werden.

Das Abstandshalter-Textil kann neben der Funktion des Dickenausgleichs auch zusätzliche vorteilhafte Funktionen übernehmen. Insbesondere kann es zur Verbesserung des Feuchtigkeitstransportes beitragen.

Zusätzlich zu dem Abstandshalter-Textil oder alternativ kann eine weitere Textilschicht 7 vorgesehen sein, die den Verbund abdeckt. Diese kann aus demselben Material bestehen wie das textile Substrat und kann einen Faser-/Fadenverbund aufweisen, der diesem gleicht, also z.B. gewebt, gestrickt, gelegt oder dergleichen sein. Es kann sich aber auch um ein anderes Material handeln, beispielsweise um ein Textil aus Naturfasern, wenn das textile Substrat aus Kunststoff-Fasern/-Fäden besteht oder umgekehrt. Hier kann der Fachmann seine Wahl unter Berücksichtigung der gegebenen Umstände völlig frei treffen.

In jeder der vorliegend beschriebenen Ausführungsformen kann zusätzlich als oberste und unterste Schicht des erfindungsgemäßen Textilverbunds ein Abschirm-Textilmaterial 8, 8' eingesetzt werden. Wiederum ist sowohl das Material hierfür als auch die Verbindung der Fasern/Fäden untereinander in diesem Textilmaterial frei wählbar. Die beiden Schichten werden an mehreren Stellen durch eine elektrisch leitfähige Verbindung 9 (realisierbar z.B. mittels Draht, leitfähigen Fäden, leitfähig beschichteten Fäden) miteinander verbunden. Dadurch werden beide Schichten auf dasselbe elektrische Potential gelegt, und die Abschirmleistung wird verbessert. So kann die Abschirmung beispielsweise aus einem gewebten oder gestrickten Textil bestehen, welches in regelmäßigen Abständen elektrisch leitfähige Durchdringungen aufweist, welche ein Gitter (vorzugsweise ein enges Gitter, z.B. mit Abständen von ca. 0,5 bis 30 mm, vorzugsweise von ca. 1,0 bis 30 mm) ergeben. Dadurch werden elektromagnetische Wellen (= Störeinflüsse) von außen zurückgehalten.

In einer besonders bevorzugten Ausführungsform kann eine der zwei notwendigen elektrisch leitenden Bahnen, die elektrischen Strom von der Elektrode und von der Gegenelektrode zu einer Ausleseanordnung leiten können (nämlich diejenige Bahn, die beim Betrieb des DES das auf Masse gelegte Signal führen würde), durch eine leitfähige Verbindung auf das elektrisch gleiche Potential wie das Abschirmgewebe gebracht werden. Dadurch kann man z.B. alle Masseleitungen der Sensoren auf das Potential der Abschirmung legen und spart sich für jeden Sensorpunkt eine leitfähige Bahn, die durch das Textil zur Ausleseanordnung geführt werden muss. Für diesen Fall wird dann natürlich auch das Abschirmgewebe über die elektrisch leitfähigen Verbindungen 9, mit denen dessen obere und untere Schicht miteinander verbunden sind, in die Ausleseanordnung angeschlossen.

Alternativ oder zusätzlich ist es möglich, weitere aktive oder passive Elemente in das erfindungsgemäße Textilmaterial zu integrieren. Dazu gehören beispielsweise piezoelektrische oder elektromagnetische Generatoren sowie Thermogeneratoren. Mit diesen lässt sich das sogenannte "energy harvesting" realisieren, mit dem die verschiedensten Formen von Energie, die ein Körper beim Bewegen abgibt oder der ein Körper durch sein Umfeld ausgesetzt ist, gesammelt und genutzt werden können.

In einer spezifischen Ausführungsform der Erfindung enthält das erfindungsgemäße Textilmaterial weitere flächige, außenseitig nicht isolierte Elektroden, die mit zusätzlichen elektrisch leitenden Bahnen verbunden sind, welche elektrischen Strom von jeder dieser Elektroden zu der genannten Ausleseanordnung leiten können, wobei jeweils ein den voranstehend beschriebenen Verbindungselementen vergleichbares Verbindungselement vorgesehen ist, das die elektrische Anbindung der zusätzlichen Elektroden an die zusätzlichen elektrisch leitenden Bahnen sicherstellt. Die zusätzlichen, außenseitig nicht isolierten Elektroden sind insbesondere paarweise zur direkten Anlage an einem Messobjekt oder einem Patienten vorgesehen. Sie können mit einer Potentialdifferenz beaufschlagbar sein und beispielsweise dazu eingesetzt werden, eine Elektrostimulation der Muskulatur zu bewirken oder eine EKG-Messung der Herzströme vorzunehmen. Insbesondere eignet sich diese Ausführungsform zur Elektrostimulation von Muskeln bei Rollstuhlfahrern, bettlägerigen Patienten, Rehabilitations-Patienten oder Koma-Patienten, um eine Durchblutung der betroffenen Regionen anzuregen und/oder zu steigern. Diese Elektroden können wie die Elektroden des DES aus elektrisch leitfähigem Elastomermaterial bestehen. In einer Variante dieser Ausführungsform besitzt das Textilmaterial mindestens zwei der erfindungsgemäßen Drucksensoren mit ihren Ankontaktierungen wie unter (a) bis (c) oben definiert, wobei jeder der DES der Drucksensoren auf einer äußeren Isolierung als äußerste, dem Substrat abgewandte Schicht eine zusätzliche, nach außen nicht isolierte Elektrodenschicht aufweist. In einer anderen Variante befinden sich diese Elektroden nicht auf den DES, sondern befinden sich seitlich der DES und isoliert von diesen unmittelbar oder mittelbar auf dem flächig ausgebildeten Textilmaterial. Sie können dabei auf einem beliebigen Träger, beispielsweise ebenfalls aus dielektrischem Elastomermaterial, angeordnet sein, wobei der Träger z.B. so gestaltet sein kann, dass die Dicke der separaten Elektroden der Dicke der eingesetzten DES entspricht.

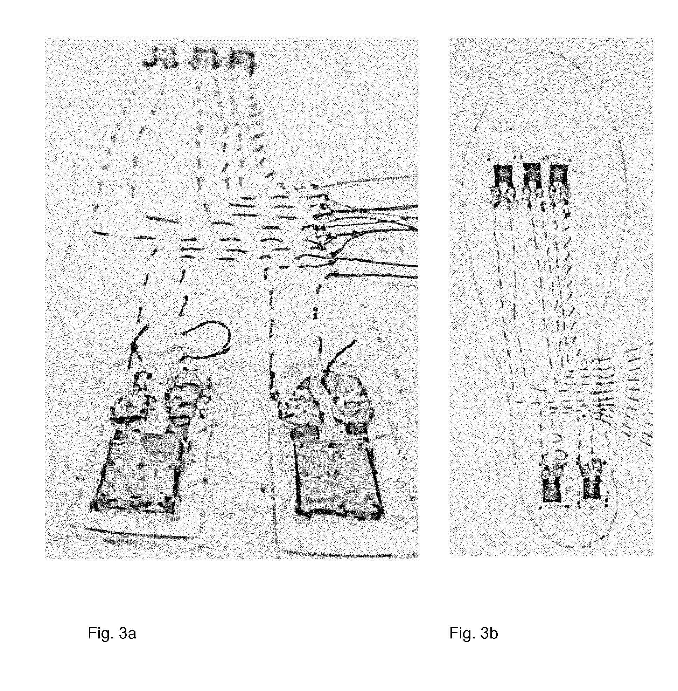

In den Figuren 3a und 3b ist ein Stadium der Herstellung bzw. Fertigung des erfindungsgemäßen Textilmaterials gezeigt. Zwei Sensoren aus DES-Folie inklusive darauf aufgebrachtem Formkörper sind in diesem Fall auf das textile Substrat geklebt. In das Substrat ist ein elektrisch leitfähiger Faden eingenäht, welcher an der Übergangsstelle zur DES-Folie mit einem leitfähigen Elastomerkomposit angebunden ist. Um Kurzschlüsse zwischen den beiden Anschlüssen während der späteren Bewegung zu vermeiden, sind die Kontaktstellen mit einem hoch isolierenden, im vorliegenden Falle transparenten Silicon überstrichen worden. Dessen Farbe hat keinerlei Bedeutung. Das Silicon wird nach dem Aufbringen ausgehärtet; es kann aber auch ein klebrig bleibendes Material für diesen Zweck verwendet werden, wenn es ohne Nachteil ist, dass das daran angrenzende Textilmaterial, sofern vorhanden, damit verklebt wird.

Das erfindungsgemäße Textilmaterial besitzt eine Reihe vorteilhafter Wirkungen, die es teilweise von Materialien unterscheidet, die aus dem Stand der Technik bekannt sind. Darunter sind besonders bemerkenswert:
- der elastische, flexible Aufbau, der sowohl Dehnungsmessungen an einem 2- oder 3-dimensionalen Gegenstand oder Körper als auch die Messung von flächiger Druckverteilung eines 2- oder 3-dimensionalen Gegenstands oder Körpers ermöglicht;
- die Wahl von DES-Sensoren, die bevorzugt kapazitativ, aber auch resistiv abgegriffen werden können. Sie ermöglichen die Messung der Kapazitätsänderung des von den Elektroden gebildeten Kondensators bzw. die Messung des Elektrodenwiderstand der einzelnen Elektroden unter mechanischer Belastung wie Druck, Dehnung oder Scherung;

- die gewählte Form der DES, die an ihren Außenseiten jeweils flächig und glatt und in der Regel als Verbundsystem integral aufgebaut sind, so dass keine einzelnen, gegeneinander verrutschbaren Lagen vorhanden sind;
- das elastomere Material der Sensoren, das elastisch, flexibel und in der Regel auch waschbar, temperaturbeständig sowie chemisch und thermisch beständig ist;
- die geringe Dicke der Sensoren sowie der optionale Zusatz eines Höhenausgleichs-Textils, so dass die Sensoren den Tragekomfort nicht beeinträchtigen und im günstigen Fall vom Träger nicht gefühlt werden;
- eine hohe Feuchtigkeitsdurchlässigkeit durch das Textilmaterial auch bei Verwendung einer großflächigen Siliconfolie, die durch strukturierte Elektroden die Sensorpunkte bildet, indem diese Folie vorzugsweise an Stellen, an denen sich keine Elektrode und Zuleitung befindet, zur Feuchtigkeitsdurchlässigkeit perforiert wird;
- das Vorhandensein von Textilmaterial mit integrierten leitfähigen Anteilen, das als gemeinsame elektrische Masse für alle vorhandenen Sensoren und gleichzeitig als elektromagnetische Abschirmung genutzt werden kann;
- die elektrisch leitenden Bahnen, die durch in das Textil eingearbeitete Leiterbahnen (gedruckt, genäht, gewebt, gestrickt, geklebt) realisiert sein können.

Aufgrund der Eigenschaften und Möglichkeiten, die das erfindungsgemäße Textilmaterial bietet, kann dieses für die folgenden Anwendungsgebiete genutzt werden:
- zur Druckmessung in Schuhsohle
- zur 3-dimensionalen Druckmessung des Fußes in Form einer Socke/eines Strumpfs
- als Handschuh mit integrierter 3-dimensionaler Druckmessung der Handpose
- als Eingabegerät zur Steuerung von Geräten
- als Eingabegerät in Form einer Druckmessmatte für Spielgeräte oder Fitnesssoftware zur Animation von Geh- und Laufbewegungen
- als zusammenrollbare Waage
- als mit den Füßen zu bedienendes Bedienelement, z. B. in sterilen Umgebungen

### (Biotechnologie, OP-Technik)

- als freihändige Steuerung von Maschinen
- als Satteldruckmessung für Pferde zur Optimierung der Passform des Sattels für Pferd und Reiter und zur Aufnahme von Messdaten während des Reitens, um das Zusammenspiel von Pferd und Reiter zu optimieren (z.B. für Pferderennen, Dressur)
- als sensitive "Haut" für Roboter zur Kollisionserkennung, wobei das erfindungsgemäße, flexible Material auch Gelenke des Roboters abdecken kann, so dass eine enge Zusammenarbeit von Mensch und Roboter ohne Schutzkäfig möglich wird
- als Eingabegerät für Menschen in Pflegeeinrichtungen, z.B. in Form von Kissen mit druckempfindlichem Bezug in Pflegeeinrichtungen zu therapeutischen Tretbewegung mit den Füßen gegen das Kissen, um auf einem Computer bestimmte Aktionen auszulösen
- als Sitz oder Armauflage für z.B. Bürostühle, Autositze, oder als druckempfindlicher Bezug für sonstige Möbel, z.B. zum Zwecke der Beurteilung der Haltung einer sitzenden Person aufgrund der Druckverteilung zur Prävention von Haltungsschäden durch Rückmeldung bei falscher Haltung an den Benutzer, aber auch zur Steuerung von Funktionen (z.B. Fernbedienungen)
- zum Erkennen von Haltungsschäden durch Druck- und Dehnungssensoren in einem eng anliegenden Bekleidungsstück ("Body Shirt")
- zur Luft-/Wasserwiderstandsmessung: wird das erfindungsgemäße Textilmaterial auf die Oberfläche z. B. eines Autos, Schiffsrumpfs, Flugzeugflügels, einer Wind-/ Wasserkraftanlage gespannt, lässt sich der lokale Druck durch das umgebende Medium auf die Oberfläche messen
- als Spielzeug: z.B. als druckempfindliche "Haut" eines Kuscheltiers wie eines Teddybären, durch die eine Reaktion auf Berührungen ausgelöst werden kann
- als Blutdruckmessgerät, z.B. in Form eines mit einem Klettverschluss und einem eingearbeiteten aufblasbaren Rohr versehenen, aufblasbaren Bandes, das um den Oberarm gelegt werden kann, wobei wie oben beschrieben der oder die Sensoren nicht durch ein Textil abgedeckt sind und direkt auf die Haut aufgelegt werden können, so dass sich der Venendruck z.B. des Oberarms messen lässt
- als Elektrostimulationsgerät oder als EKG-Messgerät
- als Gerät zur Erfassung von Hirnströmen (EEG), zum Beispiel in Form einer Haube, ggf. mit einer Mehrzahl von Sensoren und entsprechenden Verbindungselementen und elektrisch leitenden Bahnen
- als Gerät zur Messung der Muskelaktivität (Elektromyogramm).

## Patentansprüche

1. Textilmaterial zum Messen von vertikalen Drücken und von Dehnungen, umfassend ein flächig ausgebildetes textiles Substrat sowie mindestens einen darauf angeordneten Drucksensor, wobei der mindestens eine Drucksensor folgende Komponenten aufweist:
(a) einen Dielektrischen Elastomersensor (DES), umfassend einen flächigen Schichtverbund mit mindestens einer dielektrischen Elastomerschicht sowie mindestens zwei jeweils durch eine dielektrische Schicht voneinander isolierten Elektrodenschichten, die eine Elektrode und eine Gegenelektrode bilden, wobei mindestens eine der genannten Schichten eine profilierte Oberfläche besitzt, deren Erhebungen auf der Oberfläche einer anderen Schicht des DES aufliegen, und deren Vertiefungen ein ausgespartes Volumen zwischen den beiden genannten Schichten definieren,
(b) zwei elektrisch leitende Bahnen, die elektrischen Strom von der Elektrode und von der Gegenelektrode zu einer Ausleseanordnung leiten können, und
(c) zwei Verbindungselemente, die die elektrische Anbindung der zwei elektrisch leitenden Bahnen an die Elektrode und die Gegenelektrode sicherstellen.

2. Textilmaterial nach Anspruch 1, worin der Dielektrische Elastomersensor mindestens zwei durch eine dielektrische Schicht voneinander isolierte Elektrodenschichten sowie gegebenenfalls weitere dielektrische Schichten und Elektrodenschichten aufweist, die zusammen ein zumindest nach außen hin profilfreies, ebenes Flächengebilde darstellen, **dadurch gekennzeichnet, dass** der Dielektrische Elastomersensor weiterhin eine dielektrische Elastomerschicht in Form eines flexiblen flächigen Formkörpers aufweist, der sich auf einer Oberfläche des ebenen Flächengebildes befindet und der auf der dem Flächengebilde abgewandten Seite eine ebene Oberfläche aufweist, während seine dem Flächengebilde zugewandte Seite Erhebungen, die auf der Oberfläche des Flächengebildes aufliegen, sowie Vertiefungen aufweist, die ein ausgespartes Volumen zwischen der Oberfläche des Flächengebildes und der Oberfläche des Formkörpers definieren.

3. Textilmaterial nach Anspruch 1, worin der Dielektrische Elastomersensor zwei einander gegenüber angeordnete, profilierte, elastomere Schichten aufweist, deren Erhebungen in Ausnehmungen der jeweils anderen Schicht eingreifen können, wobei entweder eine oder beide dieser profilierten, elastomeren Schichten dielektrische Eigenschaften besitzen.

4. Textilmaterial nach Anspruch 3, worin beide der profilierten, elastomeren Schichten dielektrische Eigenschaften besitzen und sich eine elektrisch leitende Schicht zwischen den genannten beiden Schichten befindet, die eine plane Form besitzt, solange auf den Dielektrischen Elastomersensor kein Druck ausgeübt wird, und die durch das Eingreifen der Erhebungen in Ausnehmungen der jeweils anderen elastomeren Schicht gedehnt wird.

5. Textilmaterial nach einem der voranstehenden Ansprüche, worin die Elektrodenschichten des DES außenseitig ganz oder teilweise mit einer Isolierschicht abgedeckt sind, die vorzugsweise aus demselben Material besteht wie die dielektrische Elastomerschicht des DES.

6. Textilmaterial nach einem der voranstehenden Ansprüche, umfassend ein Abstandshalter-Textil, das auf einem Teil der oder allen denjenigen Flächen des flächig ausgebildeten textilen Substrats angeordnet ist, an denen sich kein Drucksensor befindet.

7. Textilmaterial nach einem der voranstehenden Ansprüche, weiterhin umfassend ein zweites flächig ausgebildetes Textilsubstrat, das so angeordnet ist, dass sich der mindestens eine Drucksensor und gegebenenfalls das Abstandshalter-Textil zwischen den beiden flächig ausgebildeten textilen Substraten befindet.

8. Textilmaterial nach einem der voranstehenden Ansprüche, weiterhin umfassend zwei zusätzliche, außenliegende textile Flächengebilde, die über leitfähige Verbindungen miteinander in elektrischem Kontakt stehen derart, dass die genannten zusätzlichen textilen Flächengebilde dasselbe elektrische Potential besitzen und eine elektromagnetische Abschirmung bewirken, worin die außenliegenden textilen Flächengebilde vorzugsweise in regelmäßigen Abständen elektrisch leitfähige Durchdringungen aufweisen, welche so geführt sind, dass sie ein Gitter ergeben.

9. Textilmaterial nach einem der voranstehenden Ansprüche, worin die zwei elektrisch leitenden Bahnen, die elektrischen Strom von den beiden elektrisch leitfähigen Verbindungselementen zu einer Ausleseanordnung leiten können, durch ein flächig ausgebildetes textiles Substrat geführt werden, wobei eine der beiden elektrisch leitenden Bahnen vorzugsweise die Form einer im Textil integrierten leitfähigen Struktur besitzt, die aus stärker bevorzugt eng zueinander gelegten Drähten und Fäden besteht, wobei die Integration dieser Struktur besonders bevorzugt durch Einnähen, Einstricken, Einweben oder Eindrucken erfolgt.

10. Textilmaterial nach einem der voranstehenden Ansprüche in Form eines Strumpfs, einer Socke, eines Beinlings, einer Leggins, eines Handschuhs, eines Armlings, eines einen Rumpfteil des Körper eng umgebenden Bekleidungsstücks, einer insbesondere für einen Kopf vorgesehenen Haube oder Mütze, einer zusammenrollbaren Matte, eines Kissens mit druckempfindlichem Bezug, eines Sitzes, einer Armauflage, einer Bettauflage, einer Satteldecke für Pferde, einer Bespannung für die Oberfläche eines Autos oder eines Schiffsrumpfs oder eines Flugzeugflügels oder einer Wind- oder Wasserkraftanlage, der Außenhaut eines Roboters oder der Haut oder des Fells einer Puppe oder eines Spielzeugtiers.

11. Textilmaterial nach einem der Ansprüche 1 bis 6, umfassend mindestens zwei zusätzliche, außenseitig nicht isolierte flächige Elektroden sowie eine zusätzliche elektrisch leitende Bahn zu jeder dieser flächigen Elektroden, die elektrischen Strom von dieser Elektrode zu der genannten Ausleseanordnung leiten kann, wobei jeweils ein Verbindungselement vorgesehen ist, das die elektrische Anbindung der zusätzlichen Elektrode an die zusätzliche elektrisch leitende Bahn sicherstellt, wobei die zusätzlichen Elektroden zur direkten Anlage an einem Messobjekt vorgesehen sind.

12. Textilmaterial nach Anspruch 11, umfassend mindestens zwei Drucksensoren wie in Anspruch 1 unter (a) bis (c) definiert, wobei jede der zusätzlichen Elektroden aus einem leitfähigen Elastomermaterial gebildet ist und sich auf einer äußeren Isolierschicht eines der DES befindet.

13. Textilmaterial nach Anspruch 11, worin jede der zusätzlichen Elektroden auf einem Träger angeordnet ist und sich neben und isoliert zu dem oder den DES befindet, wobei die zusätzlichen Elektroden vorzugsweise aus einem leitfähigen Elastomermaterial gebildet sind und/oder der Träger vorzugsweise aus einem dielektrischen Elastomermaterial gebildet ist.

14. Verwendung eines Textilmaterials nach einem der voranstehenden Ansprüche zur Druckmessung an einem zwei- oder dreidimensionalen Gegenstand oder Körper, insbesondere an einem Fuß oder Bein, zur Dehnungsmessung an einem zwei- oder dreidimensionalen Gegenstand oder Körper, zur dreidimensionalen Druckmessung einer Handpose, zum Eingeben von Befehlen an eine Steuerung, insbesondere über ein mit den Füßen zu bedienendes Bedienelement oder ein Kissen, welches das erfindungsgemäße Textilmaterial als Bezug aufweist, zur Druckmessung des Sattels eines Pferdes, zur Kollisionserkennung für Roboter, zum Messen und ggf. Beurteilen der Haltung einer stehenden oder sitzenden Person, zur Blutdruckmessung einer Person, zur Puls- und/oder Atemmessung einer Person, zur Erfassung der Hirnströme (EEG) einer Person, zur Messung der Muskelaktivität (Elektromyogramm) einer Person, zur Luft- und/oder Wasserwiderstandsmessung oder als Haut oder Fell eines Spielzeugs zum Bewirken einer Reaktion des Spielzeugs auf eine Druckeinwirkung.

15. Verwendung eines Textilmaterials nach einem der Ansprüche 14 bis 16 zur Druck- oder Dehnungsmessung und zusätzlich zur Stimulation der Muskulatur oder zur Erfassung der Herzströme zum Zwecke der Pulsfrequenz-Aufzeichnung eines Lebewesens, insbesondere eines bettlägerigen menschlichen Patienten.
